**Europäisches Patentamt**

(19) **European Patent Office**

**Office européen des brevets**

(11) Veröffentlichungsnummer: **0 088 242**
**B1**

# (12) EUROPÄISCHE PATENTSCHRIFT

(45) Veröffentlichungstag der Patentschrift:
**22.04.87**

(21) Anmeldenummer: **83101091.3**

(22) Anmeldetag: **05.02.83**

(51) Int. Cl.⁴: **B 60 T 13/26,** B 60 T 13/68,
B 60 T 15/14, B 60 T 15/16,
B 60 T 17/18

(54) **Führerbremsanlage für ein Schienenfahrzeug.**

(30) Priorität: **05.03.82 CH 1347/82**

(43) Veröffentlichungstag der Anmeldung:
**14.09.83 Patentblatt 83/37**

(45) Bekanntmachung des Hinweises auf die Patenterteilung:
**22.04.87 Patentblatt 87/17**

(84) Benannte Vertragsstaaten:
**AT BE CH DE FR GB IT LI NL SE**

(56) Entgegenhaltungen:
**DE - A - 2 552 489**
**DE - B - 1 160 490**
**DE - B - 2 845 311**
**US - A - 1 972 747**

(73) Patentinhaber: **Werkzeugmaschinenfabrik**
**Oerlikon-Bührle AG, Birchstrasse 155, CH-8050 Zürich**
**(CH)**

(72) Erfinder: **Fischer, Pius, Ifangstrasse 70,**
**CH-8153 Rümlang (CH)**
Erfinder: **Deutsch, Heinz, Meisenweg 11,**
**CH-8600 Dübendorf (CH)**

ACTORUM AG

## Beschreibung

Die Erfindung betrifft eine Führerbremsanlage für ein Schienenfahrzeug mit einer elektropneumatischen Bremsanlage, enthaltend in einem Arbeitsteil je ein elektropneumatisches Abschluss-, Löse- und Bremsventil und pro Führerstand einen ersten Führerventil-Steuerteil für den elektropneumatischen Normalfahrbetrieb und ein zweites Führerventil für den direkt wirkenden Rangierbetrieb.

Aus der Praxis sind Führerbremsanlagen bekannt, die in jedem Führerstand je ein oder zwei Steuerteile und im Maschinenraum einen Arbeitsteil aufweisen. Beim Normalfahrbetrieb, d.h. mit der automatischen Bremse im Betrieb, erfolgt die Übertragung der Steuerbefehle von einem ersten Führerventil aus für Bremsen und Lösen elektrisch. Daneben wird für den Rangierbetrieb je ein zweites Führerventil pro Führerstand verwendet. Bei dieser Rangierbremse, auch Direktbremse genannt, erfolgt die Übertragung pneumatisch. Fällt die Verbindung Steuerteil-Arbeitsteil z.B. durch einen Defekt in der elektrischen Übertragung aus, ist der Notfahrbetrieb zu erstellen.

Gemäss der DE-A-2 845 311, die dem Gattungsbegriff des Anspruchs 1 entspricht, wird zum elektrisch gesteuerten Bremsen und Lösen, also für den Normalfahrbetrieb, eine elektropneumatische, indirekt wirkende Bremsanlage mit einem nicht dargestellten ersten Führerventil pro Führerstand betrieben. Für den Rangierbetrieb, also zum direkten Bremsen und Lösen, muss eines der Zusatzventile betätigt werden. Der Notfahrbetrieb wird erstellt, indem mit einer Betätigungsvorrichtung Wechselventile und ein Absperrventil umgeschaltet werden, so dass nun der Druck in der Hauptluftleitung und damit die indirekte Bremse mittels einem der Zusatzbremsventile gesteuert wird. Dadurch fällt die Direktbremse für den Rangierbetrieb aus und der Fahrzeugführer muss für den Notfahrbetrieb vom ersten Führerventil (elektrische Anlage) auf ein Zusatzbremsventil wechseln.

Die Aufgabe der vorliegenden Erfindung besteht darin, eine Führerbremsanlage gemäss dem Oberbegriff des Patentanspruchs 1 so zu konzipieren, dass auch der Notfahrbetrieb ohne Beeinträchtigung der Direktbremse durchgeführt werden kann.

Erfindungsgemäss wird dies durch die Merkmale des Kennzeichens des Anspruchs 1 erreicht.

Ein durch die Erfindung erreichter Vorteil ist auch darin zu sehen, dass neben dem Normalfahrbetrieb und dem Notfahrbetrieb auch die Schnellbremsung mit dem gleichen Führerventil-Steuerteil im besetzten Führerstand, unabhängig von der Position des Führerventils im unbesetzten Führerstand, durchgeführt werden kann. Ein weiterer Vorteil ergibt sich dadurch, dass auch im Notfahrbetrieb die Rangierbremse aktiv bleibt.

Im Folgenden wird ein Ausführungsbeispiel der Erfindung anhand der beigefügten Zeichnungen näher erläutert. Es zeigt:

Fig. 1 ein schematisches Blockschaltbild einer Führerbremsanlage bekannter Art,

Fig. 2 eine schematische Darstellung des erfindungsgemässen Teils der Führerbremsanlage für den Normalfahrbetrieb und

Fig. 3 eine schematische Darstellung wie Fig. 2 im Notfahrbetrieb.

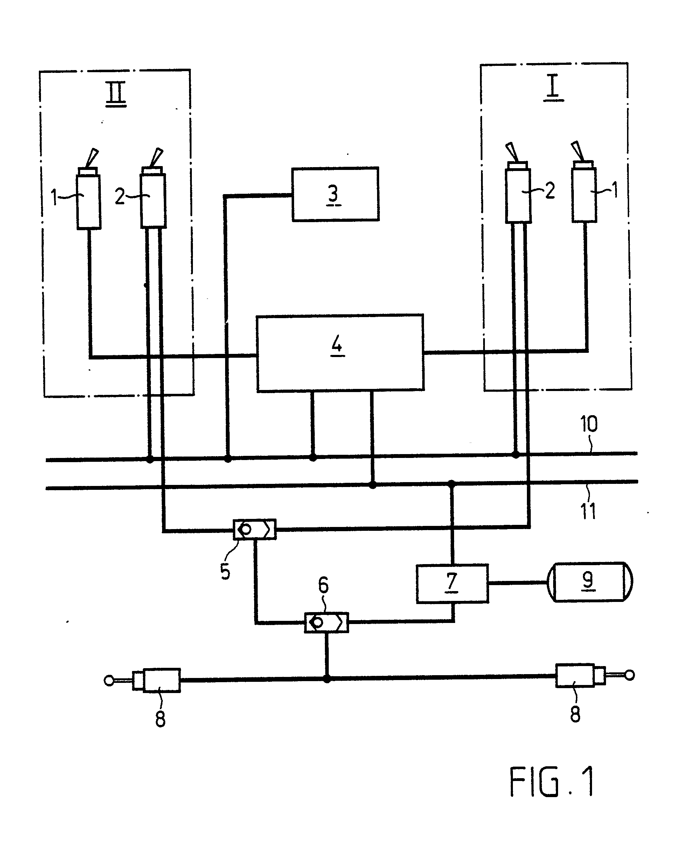

Gemäss Fig. 1 weist ein Betriebsfahrzeug zwei Führerstände I und II auf, in denen je ein erster Führerventil-Steuerteil 1 und ein zweites Führerventil 2 angeordnet sind. Eine Kompressoranlage 3 ist mit einer Speiseleitung 10 verbunden. Ein Führerventil-Arbeitsteil 4 ist mit den beiden ersten Führerventil-Steuerteilen 1, der Speiseleitung 10 und mit einer Hauptluftleitung 11 verbunden. Die beiden zweiten Führerventile 2 für den Rangierbetrieb sind ebenfalls an die Speiseleitung 10 angeschlossen und wirken alternativ über ein Doppelrückschlagventil 5 und alternativ mit der automatischen Bremse über ein Doppelrückschlagventil 6 direkt auf die Bremszylinder 8 ein. Ein Fahrzeugsteuerventil 7 ist sowohl an das Doppelrückschlagventil 6 wie auch an die Hauptluftleitung 11 und einen Hilfsluftbehälter 9 angeschlossen.

Die Funktionsweise dieser Anlage gemäss Fig. 1 ist dem Fachmann bekannt und wird daher nicht mehr erläutert.

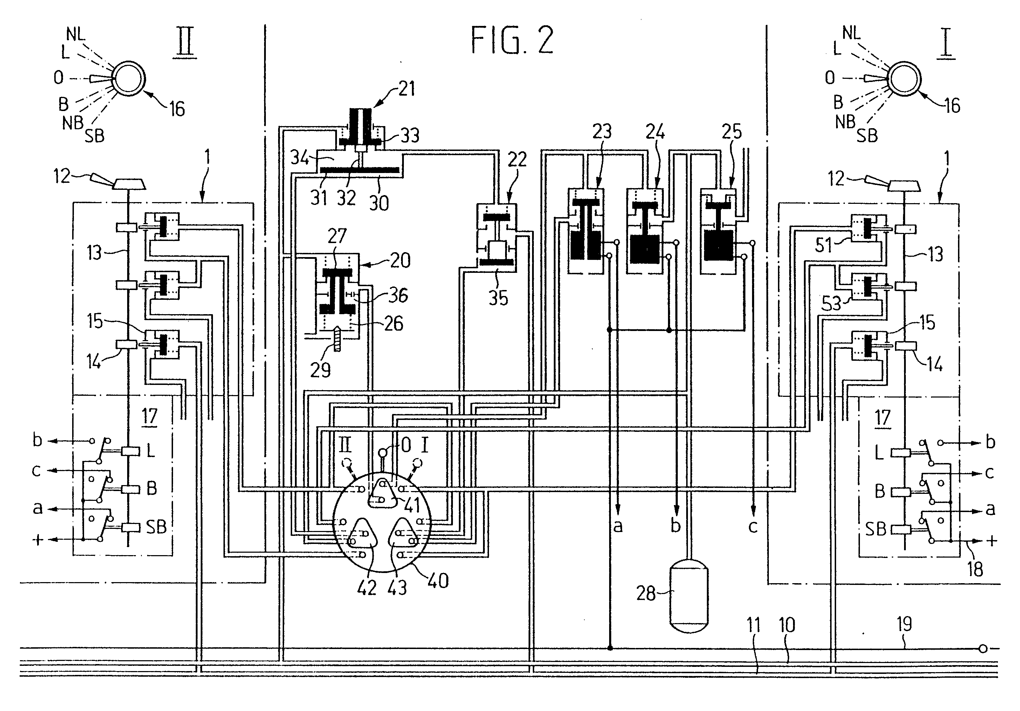

In Fig. 2 ist die erfindungsgemässe Führerbremsanlage für den Normalfahrbetrieb mit auf 5 bar gefüllter Hauptluftleitung dargestellt, unter Weglassung desjenigen Teils der Führerbremsanlage, der zur Erklärung der Erfindung nicht benötigt wird. Je in einem Führerstand I und II ist ein erster Führerventil-Steuerteil 1 angeordnet, welcher einen Bedienungshebel 12, eine Schaltwelle 13, eine darauf befestigte Nockenscheibe 14 und ein über diese Nockenscheibe betätigbares Schnellbremsventil 15 sowie einen elektromechanischen Teil 17 enthält. Im Teil 17 sind auf einer Fortsetzung der Schaltwelle 13 Nockenscheiben zur Betätigung von elektrischen Schaltern angeordnet, für die folgenden Betriebsstellungen: Lösestellung L, Bremsstellung B und Schnellbremsstellung SB. Diese Betriebsstellungen sind auch aus einer Stellungsanzeige 16 des Bedienungshebels 12 ersichtlich.

Angeordnet in einem Führerventil-Arbeitsteil sind ein Druckregler 20, ein Steuerventil 21, ein pneumatisches Abschlussventil 22 sowie je ein elektropneumatisches Abschlussventil 23, Löseventil 24 und Bremsventil 25. Erfindungsgemäss ist ebenfalls ein Umschalter 40, hier ein Dreistellungsumschalter angeordnet. Über die Kammer 41, 42 und 43 werden pneumatische Leitungen miteinander verbunden.

Die Funktionsweise der Führerbremsanlage gemäss Fig. 2 ist an sich bekannt, jedoch soll zum besseren Verständnis der nachfolgenden Erläuterungen die Erstellung der Betriebsbereitschaft kurz dargelegt werden. Zum Auffüllen der Hauptluftleitung 11 wird der Bedienungshebel 12 und die mit ihm verbundene Schaltwelle 13 beispielsweise im Führerstand I in die Lösestellung L gedreht. Aus der Speiseleitung 10 strömt durch ein von einer Reglerfeder 26 aufgedrücktes Reglerventil 27 Druckluft über die Kammer 41 und das nun elektrisch geöffnete Löseventil 24 in einen Steuerbehälter 28. Ist in diesem und in einer über eine Drossel verbundenen Kammer 36 im Druckregler 20 der mit einer Reglerschraube 29 am Druckregler 20 eingestellte Betriebsdruck von 5 bar erreicht, schliesst das Reglerventil 27 und die Verbindung zwischen Speiseleitung und Steuerbehälter 28 ist unterbrochen.

Gleichzeitig konnte auch Steuerluft durch das elektrisch geöffnete Abschlussventil 23 über die Kammer 43 des Umschalters 40 in eine Kammer 35 des pneumatischen Abschlussventils 22 strömen, wodurch dieses offengehalten wird. In einer Kammer 30 unter einer Steuermembrane 31 des Steuerventils 21 steigt der Druck entsprechend mit dem Steuerbehälterdruck an. Eine Ventilstange 32 wird dadurch nach oben bewegt und stösst ein Einlassventil 33 auf. Druckluft kann so aus der Speiseleitung 10 durch das geöffnete Abschlussventil 22 in die Hauptluftleitung 11 strömen. Ist in dieser und somit auch in einer Kammer 34 der Betriebsdruck erreicht, geht die Ventilstange 32 wieder nach unten, bis das Einlassventil 33 abschliesst. Die Ventilstange 32 steht jedoch weiterhin am Einlassventil 33 an, so dass keine Hauptleitungsluft durch eine Bohrung im Einlassventil ins Freie entweichen kann. Nach Erreichen der Betriebsbereitschaft wird der Bedienungshebel 12 in die Stellung 0 zurückgedreht. Die über elektrische Signalleitungen a, b, c betätigten Ventile 23, 24 und 25 werden nun wieder in den dargestellten Ventilstellungen gehalten.

Die Funktionen in den anderen Betriebsstellungen wie Bremsen, Lösen etc. sind bekannt und werden hier nicht näher erläutert.

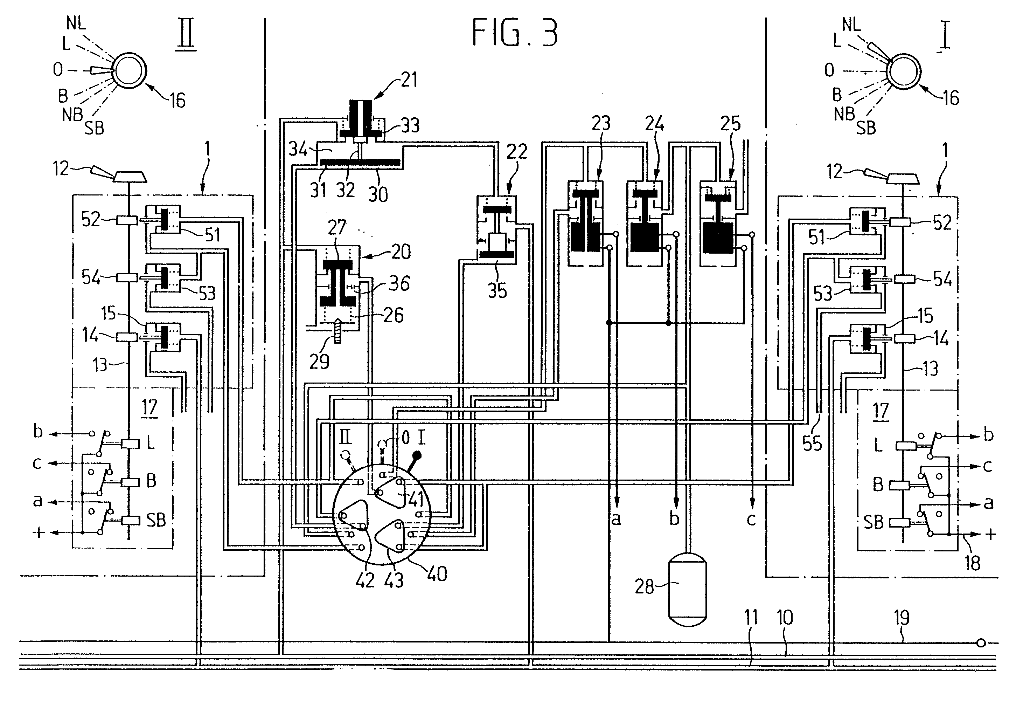

Gemäss Fig. 3 enthält erfindungsgemäss jeder erste Führerventil-Steuerteil 1 je ein pneumatisches Löseventil 51 und Bremsventil 53. Ferner sind auf der Schaltwelle 13 zwei Nockenscheiben 52 und 54 zur Betätigung der Löse- und Bremsventile 51 und 53 vorgesehen. Weiter sind entsprechende Druckluftverbindungsleitungen zum Umschalter 40 vorhanden. Die Nockenscheibe 52 ist derart ausgebildet, dass das Löseventil 51 erst geöffnet wird, wenn beim Drehen des Bedienungshebels 12 von der Stellung 0 über die Lösestellung L hinaus eine Notlösestellung NL erreicht ist. Ebenso befindet sich die Notbremsstellung NB, in der das Bremsventil 53 eingeschaltet wird, zwischen den Stellungen Bremsen B und Schnellbremsung SB. Damit wird erzielt, dass im Normalfahrbetrieb, also zwischen den Stellungen Lösen L und Bremsen B, keine zusätzliche Reibung durch die Ventilstössel der Löse- und Bremsventile 51 und 53 entsteht. Ansonsten sind die gleichen Elemente und Verbindungsleitungen wie in Fig. 2 beschrieben vorhanden.

Fällt die automatische Bremse beispielsweise wegen eines elektrischen Defektes aus, so schaltet der Fahrzeugführer den Umschalter 40 im Arbeitsteil auf eine der beiden Positionen I oder II um. Dies bedeutet, z.B. gemäss Fig. 3, dass der erste Führerventil-Steuerteil 1 im Führerstand I für den Notfahrbetrieb zugeschaltet worden ist. Dabei wird nun der Betriebsdruck für die Kammer 30 des Steuerventils 21 direkt über den Druckregler 20, die Kammer 41, das Löseventil 51 und die Kammer 42 erstellt. Über die Kammer 43 wird ebenfalls Steuerdruck in die Kammer 35 des pneumatischen Abschlussventiles 22 geleitet, wodurch das Abschlussventil 22 offengehalten wird. Infolge des Steuerdruckes in der Kammer 30 wird, wie für Fig. 2 beschrieben, Druckluft aus der Speiseleitung 10 in die Hauptluftleitung 11 abgegeben.

Zur Ausführung einer Betriebsbremsung im Notfahrbetrieb ist der Bedienungshebel 12 in die Stellung NB zu drehen. Das Löseventil 51 wird durch die Nockenscheibe 52 freigegeben und durch seine Feder geschlossen. Das Bremsventil 53 wird durch die Nockenscheibe 54 aufgestossen. Das Schnellbremsventil 15 wird von der Nockenscheibe 14 nicht betätigt und bleibt deshalb geschlossen. Durch das geöffnete Bremsventil 53 kann Luft aus den Steuerleitungen durch eine Drosselbohrung 55 ins Freie entweichen. Auf diese Weise sinkt der Druck auch in der Kammer 30, das Gleichgewicht ist gestört und die Ventilstange 32 bewegt sich nach unten, sodass die Druckluft aus der Hauptluftleitung 11 durch die Bohrung des Einlassventils 33 ins Freie abströmen kann. Zum Bremsen ist der Bedienungshebel 12 entsprechend der gewünschten Bremsstufe nur kurz in der Stellung NB zu belassen und nachher in die Stellung 0 zurückzudrehen. In dieser Stellung ist sowohl das Bremsventil 53 als auch das Löseventil 51 geschlossen. Die Luft der Hauptluftleitung 11 strömt so lange ab, bis in der Hauptluftleitung 11 wieder der gleiche Druck herrscht wie in der Kammer 30 des Steuerventils 21 und die Ventilstange 32 das Steuerventil 21 wieder abschliesst. Für jede weitere Bremsstufe ist in der vorhin beschriebenen Weise der Druck in den Steuerleitungen und damit in der Kammer 30 bis zum Erreichen der Vollbremsung weiter abzusenken.

Beim Lösen der Bremse ist der Bedienungshebel 12 in die Stellung NL zu legen. In dieser Stellung ist das durch die Nockenscheibe 52 betätigte Löseventil 51 offen, während das Bremsventil 53 geschlossen ist. Da die Kraft der Reglerfeder 26 grösser ist als der entsprechende Steuerdruck im Druckregler 20, wird das Reglerventil 27 aufgestossen. So kann Luft aus der Speiseleitung 10 in die Steuerleitungen strömen und in den damit verbundenen Kammern steigt der Druck. Dies bewirkt, dass die Ventilstange 32 des Steuerventils 21 nach oben geht und das Einlassventil 33 aufstösst. Druckluft kann nun aus der Speiseleitung 10 in die Hauptluftleitung 11 strömen. Ebenfalls steigt der Steuerdruck weiter an, bis er den Betriebsdruck von 5 bar erreicht hat. In diesem Moment herrscht wieder Gleichgewicht zwischen dem Druck der Reglerfeder 26 und dem Steuerdruck im Druckregler 20, d.h. das Reglerventil 27 schliesst auf seinem Ventilsitz ab. Ist in der Hauptluftleitung 11 der Betriebsdruck erreicht, schliesst auch das Einlassventil 33 wieder.

Im Notfahrbetrieb bleiben die drei elektropneumatischen Abschluss-, Löse- und Bremsventile 23, 24 und 25 unwirksam. Eine Schnellbremsung wird durch Drehen des Bedienungshebels 12 in die Schnellbremsstellung SB erreicht, wodurch das Schnellbremsventil 15 aufgestossen wird und somit die Hauptluftleitung 11 über das offene Ventil entlüftet wird, wie dies auch im Normalfahrbetrieb geschieht.

Unabhängig vom Normalfahrbetrieb und vom Notfahrbetrieb kann bei Bedarf der Rangierbetrieb mit dem zweiten Führerventil 2 durchgeführt werden.

**Patentansprüche**

1. Führerbremsanlage mit mindestens einem Führerstand (I, II) für ein Schienenfahrzeug mit einer elektropneumatischen Bremsanlage, enthaltend in einem Arbeitsteil je ein elektropneumatisches Abschluss-, Löse- und Bremsventil (23, 24, 25) und pro Führerstand (I, II) einen ersten Führerventil-Steuerteil (1) mit elektro-mechanischem Steuerteil (17) für den elektropneumatischen indirekt wirkenden Normalfahrbetrieb und ein zweites Führerventil für den direkt wirkenden Rangierbetrieb sowie einen pneumatischen Umschalter (40) mit Verbindungsleitungen zum Umschalten auf Notfahrbetrieb, dadurch gekennzeichnet, dass der erste Führerventil-Steuerteil (1) zusätzlich zu dem elektro-mechanischen Steuerteil (17) noch je ein pneumatisches Löse- und Bremsventil (51, 53) aufweist und dass die Bremsanlage durch den pneumatischen Umschalter (40) und seine Verbindungsleitungen pneumatisch im Normalbetrieb mit den elektro-pneumatischen Abschluss-, Löse- und Bremsventilen (23, 24, 25) und im Notfahrbetrieb mit den pneumatischen Löse- und Bremsventilen (51, 53) verbunden ist.

2. Führerbremsanlage gemäss Anspruch 1, dadurch gekennzeichnet, dass im Normalfahrbetrieb ein pneumatischer Druckregler (20) mit den elektropneumatischen Löse- und Abschlussventilen (24, 23) und ein pneumatisches Steuerventil (21) mit dem elektropneumatischen Abschlussventil (23) sowie im Notfahrbetrieb der Druckregler (20) und ein pneumatisches Abschlussventil (22) mit dem pneumatischen Löseventil (51) und das Steuerventil (21) mit dem pneumatischen Bremsventil (53) über den Umschalter (40) pneumatisch verbunden sind.

3. Führerbremsanlage gemäss Anspruch 2, dadurch gekennzeichnet, dass je eine Kammer (36, 30, 35) von Druckschalter (20), Steuerventil (21) und Abschlussventil (22) mit dem Umschalter (40) pneumatisch verbunden ist.

4. Führerbremsanlage gemäss einem der vorangehenden Patentansprüche, dadurch gekennzeichnet, dass der pneumatische Umschalter (40) als 3-Stellungsschalter ausgebildet ist.

5. Führerbremsanlage gemäss einem der vorangehenden Patentansprüche, dadurch gekennzeichnet, dass eine Schaltwelle (13) des Führerventil-Steuerteils (1) je eine Nockenscheibe (52, 54) zur Betätigung des pneumatischen Löse- und Bremsventils (51, 53) aufweist.

**Claims**

1. Driver operated brake installation with at least one driver's cabin (I, II) for a railway vehicle with an electro-pneumatic brake system, including in one operation section an electro-pneumatic closing valve (23), an electro-pneumatic release valve (24) and an electro-pneumatic brake-valve (25) and in each driver's cabin (I, II) a first driver's valve control unit (1) with an electro-mechanical control-unit (17) for the electro-pneumatic indirectly acting normal operation and a second driver's valve for the directly acting shunting operation and including a pneumatic switch-over device (40) provided with connecting pipes for switching to emergency operation, characterised in that the first driver's valve control unit (1) additionally to the electro-mechanical control unit (17) contains a pneumatic release valve (51) and a pneumatic brake valve (53) and that the brake installation is pneumatically connected through the pneumatic switch-over device (40) and its connecting pipes in normal operation to the electro-pneumatic closing valve (23), release valve (24) and brake valve (25) and in emergency operation to the pneumatic release valve (51) and brake valve (53).

2. Driver operated brake installation according to claim 1, characterised in that the pneumatic switch-over device (40) connects pneumatically in normal operation a pneumatic pressure regulator (20) to the electro-pneumatic release valve (24) and closing valve (23) and connects a pneumatic control valve (21) to the electro-pneumatic closing valve (23) as well as in emergency operation the pressure regulator (20) and a pneumatic closing valve (22) to the pneumatic release valve (51) and connects the control valve (21) to the pneumatic brake valve (53).

3. Driver operated brake installation according to claim 2, characterised in that the pneumatic switch-over device (40) is pneumatically connected to a chamber (36, 30, 35) of each of pressure regulator (20), control valve (21) and pneumatic closing valve (22).

4. Driver operated brake installation according to one of the preceding claims, characterised by the pneumatic switch-over device (40) being a three-way cock.

5. Driver operated brake installation according to one of the preceding claims, characterised in that a control shaft (13) of the driver's valve control unit (1) is provided with one cam (52, 54) for each of the pneumatic release valve (51) and brake valve (53) for operating said valves.

**Revendications**

1. Installation de freinage commandée par le mécanicien comportant au moins un poste de mécanicien (I, II) pour un véhicule sur rail avec une installation de freinage électropneumatique, composée d'une partie fonctionnelle avec respectivement une vanne de fermeture de desserrage et de freinage (23, 24, 25) électropneumatique et pour chaque poste de mécanicien (I, II), une première partie de commande de vanne de mécanicien (1) avec une partie de commande électromécanique (17) pour le fonctionnement normal agissant de manière électropneumatique indirecte et une seconde vanne de mécanicien pour le fonctionnement en manœuvre agissant de manière directe ainsi qu'un inverseur (40) pneumatique avec des conduites de liaison pour passer en fonctionnement de secours, caractérisée en ce que la première partie de commande de la vanne de mécanicien (1) comporte en plus de la partie de commande électromécanique (17) une vanne de desserrage et de freinage pneumatique (51, 53) et en ce que l'installation de freinage est reliée par l'inverseur pneumatique (40) et par ses conduites de liaison pneumatiques, en fonctionnement normal avec les vannes électropneumatiques d'arrêt, de desserrage et de freinage (23, 24, 25) et en fonctionnement de secours avec les vannes pneumatiques de desserrage et de freinage (51, 53).

2. Installation de freinage commandée par le mécanicien, caractérisée en ce qu'en fonctionnement normal, un régulateur de pression pneumatique (20) est relié aux vannes électropneumatiques de desserrage et de fermeture (24, 23) et une vanne de commande pneumatique (21) est reliée à la vanne électropneumatique d'arrêt (23) et en fonctionnement de secours, le régulateur de pression (20) et une vanne de fermeture (22), pneumatique sont reliés à la vanne pneumatique de desserrage (51) et la soupape de commande (21) est reliée à la vanne pneumatique de freinage (53) de manière pneumatique par l'intermédiaire de l'inverseur (40).

3. Installation de freinage commandée par le mécanicien selon la revendication 2, caractérisée en ce que chaque chambre (36, 30, 35) du commutateur de pression (20), de la soupape de commande (21) et de la vanne de fermeture (22) est reliée pneumatiquement à l'inverseur (40).

4. Installation de freinage commandée par le mécanicien selon l'une quelconque des revendications précédentes, caractérisée en ce que l'inverseur pneumatique (40) est un inverseur à trois positions.

5. Installation de freinage commandée par le mécanicien selon l'une des revendications précédentes, caractérisée en ce qu'un axe de commutation (13) de la partie de commande de la vanne de mécanicien (1) comporte un disque à came (52, 54) respectif pour actionner la vanne pneumatique de desserrage et de freinage (51, 53).

FIG.1

FIG.2

FIG.3

0 088 242